# DEMANDE DE BREVET EUROPEEN

(11) **EP 4 435 278 A1**
(43) Date de publication de la demande: **25.09.2024**
(21) Numéro de dépôt: 24165382.3
(22) Date de dépôt: 22.03.2024
(51) Int. Cl.: F16C 7/02, F16F 15/08

(54) **DISPOSITIF DE BIELLE PRÉSENTANT DES CAPACITÉS D AMORTISSEMENT**

(30) Priorité: 24.03.2023 FR 2302800
(71) Demandeur: Conseil et Technique, 31570 Sainte Foy d'Aigrefeuille (FR)
(72) Inventeur: VALEMBOIS, Guy, 31650 LAUZERVILLE (FR)
(74) Mandataire: Cabinet Bleger-Rhein-Poupon

(57) **Abrégé**

Dispositif de bielle présentant des capacités d'amortissement, du type comprenant un corps (30) muni de deux moyens d'attache distants (31). Le corps (30) comporte dans le sens longitudinal au moins une zone de fragilisation dans le sens transversal, conçue apte à générer, lors d'une sollicitation axiale en compression ou en traction, une déformation dans le sens transversal, en ce que ladite zone de fragilisation est associée à des moyens d'amortissement (37) conçus aptes à atténuer ladite déformation. La zone de fragilisation consiste en au moins une lumière s'étendant dans le sens longitudinal, tandis que les moyens d'amortissement consistent en au moins un moyen de liaison (37) des deux bords longitudinaux de la lumière, uni aux deux bords et constitué d'un élément (37) en matériau déformable élastiquement.

## Description

La présente invention a pour objet un dispositif de bielle présentant des capacités d'amortissement, et notamment, mais non limitativement un dispositif de bielle en matériau composite.

Les bielles sont des éléments de structure que l'on retrouve dans des treillis de toutes natures, servant d'éléments de liaison structurale, notamment, mais non limitativement, dans le domaine de l'aéronautique et celui du spatial. Les bielles réalisées en matériau composite présentent des qualités de légèreté, tout en étant résistantes et rigides.

De manière habituelle une telle bielle comporte un corps muni de deux moyens d'attache distants, qui peuvent consister en des moyens d'articulation, et destinés à la fixation de la bielle entre deux points d'une structure. Le corps composite, qui est destiné à des sollicitations en compression et en traction, peut se présenter sous différents aspects, dans la plupart des cas il est de forme allongée, et il peut être plein ou creux, c'est-à-dire tubulaire, ou constitué d'un ou de plusieurs éléments tels que des membrures plus ou moins parallèles réunies par leurs extrémités.

Si ces bielles montrent de grandes qualités, elles peuvent aussi présenter des inconvénients ou des défauts, tels que par exemple une transmission de mouvements parasites issus d'excitations sur la structure, une transmission du bruit dans les structures, une fatigue des structures et donc une durée de vie limitée de celles-ci, notamment lorsqu'elles sont en matériau composite.

On connaît par le document JPS5790921U, une bielle de moteur thermique dont le corps comporte, du côté de la tête de bielle, une ouverture dans laquelle est intégré un élément en matière plastique, de type silent bloc, destiné à absorber les vibrations et à atténuer le bruit. Une telle bielle est exclusivement réservée aux bielles de moteurs thermiques, et en acier. Dans le cas d'une bielle en matériau composite, l'ouverture ménagée dans le corps, telle qu'elle est réalisée, conduirait à affaiblir la résistance dans le sens axial à la compression ou à la traction.

La présente invention a pour but de supprimer les divers inconvénients précités, ou au moins en réduire les effets, en proposant un dispositif de bielle qui présente des capacités d'amortissement, afin d'atténuer les mouvements dynamiques des structures, et qui peut notamment, mais non exclusivement, concerner les dispositifs de bielle en matériau composite.

Le dispositif de bielle présentant des capacités d'amortissement selon l'invention, type comprenant un corps muni de deux moyens d'attache distants, et il se caractérise en ce que ledit corps comporte dans le sens longitudinal au moins une zone de fragilisation dans le sens transversal, conçue apte à générer, lors d'une sollicitation axiale en compression ou en traction, une déformation dans le sens transversal ; en ce que ladite zone de fragilisation est associée à des moyens d'amortissement conçus aptes à atténuer ladite déformation ; et en ce que ladite zone de fragilisation consiste en au moins une lumière s'étendant dans le sens longitudinal, tandis que les moyens d'amortissement consistent en au moins un moyen de liaison des deux bords longitudinaux de ladite lumière, uni auxdits deux bords et constitué d'un élément en matériau déformable élastiquement.

Du fait de la fragilisation du corps dans le sens transversal, une sollicitation axiale en compression tend à un gonflement de la section transverse, tandis qu'une sollicitation axiale en traction tend au rétrécissement de la section transverse. En associant des moyens d'amortissement de la déformation dans le sens transversal, c'est-à-dire d'atténuation du gonflement ou du rétrécissement, on agit sur l'amortissement de la déformation axiale de la bielle, sans altérer sa résistance en traction ou en compression.

Selon un premier mode de réalisation du dispositif de bielle selon l'invention, le corps est de forme globalement tubulaire, et il comporte au moins une fente longitudinale constituant la fragilisation dans le sens transversal, tandis que les moyens d'amortissement consistent pour chaque fente, en une pièce de renfort recouvrant tout ou partie de ladite fente par l'extérieur dudit corps, après interposition et solidarisation d'un élément en matériau amortissant.

La géométrie de la pièce est adaptée pour permettre la transformation des mouvements transverses du corps de la bielle, dans la zone de découpe, en cisaillement du lien amortissant.

Le comportement dynamique du dispositif de bielle est le suivant, lors d'une compression, la fente a tendance à s'élargir, et la zone qui la comporte à gonfler, et ce gonflement induit le cisaillement du lien amortissant tout en limitant l'amplitude du gonflement, tandis que lors d'une traction, la fente tend à se refermer, et la zone qui la comporte à se rétreindre, la résistance en cisaillement du lien en matériau amortissant limitant la déformation de rétrécissement.

Une sollicitation alternée sur la structure dans laquelle est disposée la bielle peut être consécutive d'un choc ou d'une excitation vibratoire sur la structure, ce qui provoque une sollicitation alternée de traction-compression dans la bielle, et donc un cisaillement alterné du ou des les liens en matériau amortissant.

La nature viscoélastique du matériau amortissant constituant les liens, bloque d'autant plus les déformations que la vitesse de déformation est grande, cette propriété permet l'absorption énergétique propre à atténuer les mouvements dynamiques de la bielle.

La nature et la dureté du matériau amortissant seront adaptées à la nature des perturbations dynamiques à maîtriser. Il pourra être en élastomère, en mousse d'élastomère ou en tout autre matériau favorisant l'amortissement des mouvements parasites.

Il est à noter que les déformations transverses de la zone de découpe sont très grandes devant les déformations longitudinales de la bielle : l'évolution de longueur de la bielle est consécutive de sa rigidité longitudinale et de l'effort longitudinal sollicitant la bielle.

Le fait que la ou les découpes soient longitudinales n'affecte que très peu la rigidité de la bielle tout en permettant des déformations transverses locales significatives, ce qui donne un effet multiplicatif entre déformation longitudinale et transversale locale.

Cette propriété de maintien d'un niveau élevé de rigidité permet d'avoir un comportement très rigide de la structure dans laquelle la bielle est intégrée tout en apportant une capacité d'amortissement bénéfique à ladite structure.

Par exemple, la présence de quelques bielles de ce type dans le caisson central d'un aéronef, permettra d'amener un amortissement structural sans modification des modes propres de l'avion quant à leurs fréquences tout en en diminuant les amplitudes.

Dans un autre domaine d'usage, la présence de bielles amortissantes judicieusement placées entres les parois de pales d'éolienne pourra réduire les perturbations dynamiques, ce qui a pour conséquence une augmentation significative de la durée de vie de ces pales.

Selon un deuxième mode de réalisation du dispositif de bielle selon l'invention, le corps est constitué d'une poutre en I, c'est-à-dire qu'elle comporte une âme intercalée entre deux membrures, ladite âme présentant une fente longitudinale, tandis que les moyens d'amortissement consistent en une pièce de renfort recouvrant tout ou partie de ladite fente sur au moins un côté de ladite âme, après interposition d'un élément en matériau amortissant.

La résistance et rigidité de la bielle sont assurées par les membrures alors que l'âme assure la cohésion des deux membrures entre elles. La fragilisation longitudinale de l'âme autorise des déformations locales des membrures en rapprochement ou en écartement lorsque la bielle est sollicitée, respectivement en traction ou en compression. Ces mouvements de déformations transverses des membrures seront contrôlés par le ou les pièces de renfort, en association avec le ou les éléments en matériau amortissant.

Les déformations transverses des membrures induiront des déformations de cisaillement du ou des éléments amortissants ce qui permettra à la bielle d'avoir des propriétés amortissantes lors de sollicitations dynamiques pouvant se superposer à la sollicitation nominale de la bielle.

Selon une autre caractéristique additionnelle du dispositif de bielle amortissante selon l'invention, la ou les pièces renfort sont réalisées en un matériau identique à celui dans lequel est réalisé le corps.

Selon un troisième mode de réalisation du dispositif de bielle selon l'invention, le corps est constitué de deux membrures maintenues à distance l'une de l'autre au travers d'au moins une entretoise, laquelle au moins une entretoise est constituée de deux segments indépendants, chacun solidaire d'une membrure et faisant saillie vers l'autre membrure, dont les parties extrêmes libres sont juxtaposées et se font face et sont solidarisées l'une à l'autre par l'intermédiaire d'un élément en matériau amortissant.

Ce mode de réalisation permet de plus la maîtrise du flambage des bielles présentant un allongement significatif. Les membrures de la bielle ont une forme adaptée de manière à provoquer le flambage des membrures vers l'extérieur, le dit flambage étant bloqué par l'entretoise.

Selon une autre caractéristique additionnelle du dispositif de bielle amortissante selon l'invention, il est réalisé en totalité ou en partie en matériau composite.

Le dispositif de bielle peut être réalisé en métal, mais de préférence il est en matériau composite, notamment le corps.

Selon une autre caractéristique additionnelle du dispositif de bielle amortissante selon l'invention, la solidarisation du ou des éléments en matériau amortissant au corps est réalisée par collage et/ou polymérisation.

Les avantages et les caractéristiques du dispositif de bielle selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective d'un premier mode de réalisation d'un dispositif de bielle amortissante selon l'invention,
- la figure 2 représente une vue en coupe transversale du même dispositif de bielle amortissante,
- la figure 3 représente une vue en coupe transversale d'un deuxième mode de réalisation du dispositif de bielle amortissante selon l'invention,
- la figure 4 représente une vue schématique en perspective d'un troisième mode de réalisation du dispositif de bielle amortissante selon l'invention,
- la figure 5 représente une vue schématique en perspective et en coupe transversale du même dispositif de bielle amortissante.

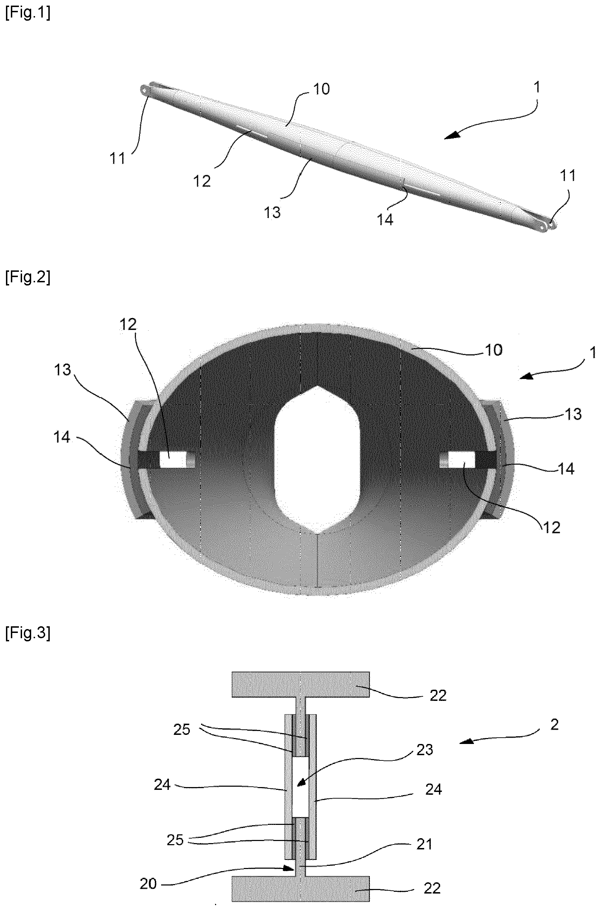

En référence aux figures 1 et 2, on peut voir un premier mode de réalisation d'un dispositif de bielle amortissante 1 selon l'invention, en l'occurrence réalisé en matériau composite.

Ce dispositif de bielle 1 est de type comportant un corps 10 muni de deux moyens d'attache distants 11. Le corps 10 est de conception tubulaire, en l'occurrence en forme de fuseau, tandis que les points d'attache 11 consistent chacun un oeilleton.

Selon l'invention, le corps 10 comporte deux fentes longitudinales 12, dont une seule est visible sur la figure 1, diamétralement opposées et localisées, préférentiellement dans la portion médiane du corps 10. Toujours selon l'invention, les fentes 12 sont recouvertes par l'extérieur, en l'occurrence pas en totalité mais en zone médiane, chacune d'une pièce de renfort 13, après avoir intercalé un élément amortisseur 14 en matériau amortissant, de préférence un élastomère.

On comprendra que des sollicitations axiales du dispositif de bielle 1, en compression et en traction, génèrent des déformations des fentes 12, respectivement en élargissement ou un rétrécissement, déformations limitées et amorties par les éléments amortisseur 14 en matériau élastomère, qui travaillent en cisaillement avec les pièces de renfort 13.

Par conséquent, le dispositif de bielle 1 est amorti dans le sens longitudinal, sans perte de rigidité.

Des variantes sont possibles, ainsi, non limitativement, outre les caractéristiques du matériau choisi pour la réalisation des éléments amortisseur 14, on peut par exemple faire varier le nombre de fentes 12, ainsi que leur largeur.

En référence maintenant à la figure 3, on peut voir un deuxième mode de réalisation d'un dispositif de bielle amortissante 2 selon l'invention. Ce dispositif de bielles 2 est de type comportant un corps 20 constitué d'une poutre en I, comprenant une âme 21 bordée de deux membrures 22.

Selon l'invention, l'âme 21 est munie longitudinalement d'une découpe 23, recouverte, en l'occurrence de part et d'autre, par deux pièces de renfort 24, liées à l'âme 21 au travers d'éléments en élastomères 25.

Lors de sollicitations axiales en compression ou en traction, la découpe 23 tend à, respectivement, rétrécir ou s'élargir, les éléments en élastomères 25 qui travaillent en cisaillement entre l'âme 22 et les pièces de renfort 24, assurent l'amortissement de ces déformations transversales, et par conséquent amortissent également les déformations axiales.

Selon des variantes, il est possible de faire varier la largeur de la découpe 23, ainsi que la distance selon laquelle elle s'étend.

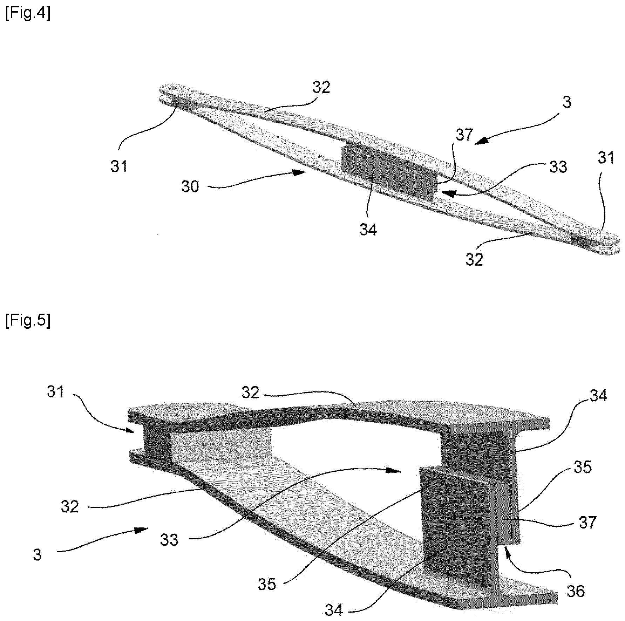

En référence maintenant aux figures 4 et 5, on peut voir un troisième mode de réalisation d'un dispositif de bielle amortissante 3 selon l'invention. Tel que cela est visible sur la figure 1, le dispositif de bielle 3 est du type comprenant corps 30 et deux moyens d'attache distants 31, le corps 30 étant constitué de deux membrures 32 conformées en fuseau, reliées deux à deux d'une part par leurs extrémités et d'autre part en partie médiane par une entretoise 33.

En référence plus particulièrement à la figure 5, on peut voir que l'entretoise 33 est constituée du rapprochement de deux segments 34, chacun solidaire d'une membrure 32 dont il fait saillie en direction de l'autre membrure 32, les parties extrêmes 35 de ces segments 34 qui se font face, étant séparées par un espace 36 dans lequel est intercalé un élément 37 qui leur est solidarisé.

Les sollicitations axiales en traction ou en compression du dispositif de bielle 3 induisent, respectivement, le rapprochement ou l'écartement des membrures 32, tandis que le travail en cisaillement de l'élément 36, permet de réaliser l'amortissement.

Quel que soit le mode de réalisation considéré, un dispositif de bielle composite amortissante 1, 2 ou 3, présente une capacité d'amortissement permettant l'atténuation des mouvements dynamiques des structures, sans altérer ses capacités de résistance.

Cette atténuation présente les avantages suivants :
- réduction des mouvements parasites issus d'excitations sur la structure,
- modification du comportement de la structure dans les modes propres de vibration,
- amélioration de la tenue en fatigue des structures,
- augmentation de la durée de vie des structures,
- réduction de la transmission du bruit dans les structures,
- amélioration du confort des véhicules ou objets dans lesquels sont implantées de tels dispositif de bielle amortissante.

## Revendications

1. Dispositif de bielle présentant des capacités d'amortissement, du type comprenant un corps (10 ; 20 ; 30) muni de deux moyens d'attache distants (11 ; 31), **caractérisé en ce que** ledit corps (10 ; 20 ; 30) comporte dans le sens longitudinal au moins une zone de fragilisation dans le sens transversal (12 ; 23 ; 36), conçue apte à générer, lors d'une sollicitation axiale en compression ou en traction, une déformation dans le sens transversal ; **en ce que** ladite zone de fragilisation (12 ; 23 ; 36) est associée à des moyens d'amortissement (14 ; 25 ; 37) conçus aptes à atténuer ladite déformation ; et **en ce que** ladite zone de fragilisation consiste en au moins une lumière (12 ; 23 ; 36) s'étendant dans le sens longitudinal, tandis que les moyens d'amortissement consistent en au moins un moyen de liaison (14 ; 25 ; 37) des deux bords longitudinaux de ladite lumière (12 ; 23 ; 36), uni auxdits deux bords et constitué d'un élément (14 ; 25 ; 37) en matériau déformable élastiquement.

2. Dispositif de bielle selon la revendication 1, **caractérisé en ce que** le corps (10) est de forme globalement tubulaire, et il comporte au moins une fente longitudinale (12) constituant la fragilisation dans le sens transversal, tandis que les moyens d'amortissement consistent pour chaque fente (12), en une pièce de renfort (13) recouvrant tout ou partie de ladite fente (12) par l'extérieur dudit corps (10), après interposition et solidarisation d'un élément en matériau amortissant (14).

3. Dispositif de bielle selon la revendication 1, **caractérisé en ce que** le corps (20) est constitué d'une poutre en I, c'est-à-dire qu'elle comporte une âme (21) intercalée entre deux membrures (22), ladite âme (20) présentant une fente longitudinale (23), tandis que les moyens d'amortissement consistent en une pièce de renfort (24) recouvrant tout ou partie de ladite fente (23) sur au moins un côté de ladite âme (21), après interposition d'un élément (25) en matériau amortissant.

4. Dispositif de bielle selon l'une quelconque des revendication 1 à 3, **caractérisé en ce que** la ou les pièces renfort (13 ; 24) sont réalisées en un matériau identique à celui dans lequel est réalisé le corps (10 ; 20).

5. Dispositif de bielle selon la revendication 1, **caractérisé en ce que** le corps (30) est constitué de deux membrures (32) maintenues à distance l'une de l'autre au travers d'au moins une entretoise (33), laquelle au moins une entretoise (33) est constituée de deux segments indépendants (34), chacun solidaire d'une membrure (32) et faisant saillie vers l'autre membrure (32), dont les parties extrêmes libres (35) sont juxtaposées et se font face et sont solidarisées l'une à l'autre par l'intermédiaire d'un élément (37) en matériau amortissant.

6. Dispositif de bielle en matériau composite selon l'une quelconque des revendications 1 à 5, **caractérisé en ce qu'**il est réalisé en totalité ou en partie en matériau composite.

7. Dispositif de bielle en matériau composite selon l'une quelconque des revendications 1 à 6, **caractérisé en ce que** la solidarisation du ou des éléments (14 ; 25 ; 37) en matériau amortissant au corps (10 ; 20 ; 30) est réalisée par collage et/ou polymérisation.

8. Dispositif de bielle en matériau composite selon l'une quelconque des revendications 1 à 7, **caractérisé en ce que** le matériau amortissant consiste en un élastomère ou une mousse d'élastomère.
